# EUROPEAN PATENT APPLICATION

(11) **EP 4 683 010 A1**
(43) Date of publication of application: **21.01.2026**
(21) Application number: 24189068.0
(22) Date of filing: 17.07.2024
(51) Int. Cl.: H01M 8/04029, B60L 58/33, H01M 8/0432, H01M 8/04701, H01M 8/04746, H01M 8/04992

(54) **FUEL CELL SYSTEM CONTROL**

(71) Applicant: VOLVO TRUCK CORPORATION, 405 08 Göteborg (SE)
(72) Inventor: ANDERSSON, Arne, 435 42 Mölnlycke (SE); ARYA, Pranav, 412 85 Göteborg (SE)
(74) Representative: Valea AB

(57) **Abstract**

A computer system (52) comprising processing circuitry configured to issue control information to a fuel cell system (12) being fueled by hydrogen gas and air, wherein the air is supplied to the fuel cell system (12) at an air feeding pressure, the fuel cell system (12) being adapted to be cooled by a cooling system (42) accommodating a coolant.

## Description

### TECHNICAL FIELD

The disclosure relates generally to fuel cell systems. In particular aspects, the disclosure relates to fuel cell system control. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A fuel cell system is generally adapted to be fueled by hydrogen gas and air in order to produce electric power and to emit water. Put differently, a fuel cell system may produce water as a byproduct of an electrochemical reaction between hydrogen and oxygen in the air. Since the emissions from a fuel cell system may have a relatively low temperature, often the temperature is significantly lower than the temperature of emissions from for instance an internal combustion engine, it may be challenging to cool a fuel cell system. In order to enhance the cooling capacity of a fuel cell system, water in liquid form that has been emitted from the fuel cell system may be used. For instance, the water in liquid form may be sprayed upstream of or onto a radiator of a cooling system of the fuel cell system in order to increase the cooling capacity of the cooling system.

### SUMMARY

According to a first aspect of the disclosure, there is provided computer system comprising processing circuitry configured to issue control information to a fuel cell system being fueled by hydrogen gas and air, wherein the air is supplied to the fuel cell system at an air feeding pressure, the fuel cell system being adapted to be cooled by a cooling system accommodating a coolant, the fuel cell system being adapted to produce power and to emit water, the processing circuitry being configured to:
- obtain target water amount information indicative of a target amount of water in liquid form which is requested to be emitted from the fuel cell system during a predetermined time range;
- obtain power information indicative of an actual or predicted power produced by the fuel cell system during the predetermined time range;
- obtain current coolant temperature information indicative of a current temperature of the coolant;
- obtain current cooling capacity information indicative of a current cooling capacity of the cooling system;
- obtain current air feeding pressure information indicative of a current air feeding pressure at which air is supplied to the fuel cell system;
- on the basis of the target water amount information; the power information; the current coolant temperature information; the current cooling capacity information and the current air feeding pressure information:
   ∘ in response to determining that the fuel cell system, when operated at the current coolant temperature and the current air feeding pressure cannot produce the actual or predicted power as well as emit the target amount of water in liquid form during the predetermined time range, and in response to determining that the current cooling capacity of the cooling system does not enable the coolant temperature to be lowered from the current temperature of the coolant whilst producing the actual or predicted power: issue control information to the fuel cell system to operate the fuel cell system at an increased air feeding pressure, the increased air feeding pressure being higher than the current air feeding pressure.

The first aspect of the disclosure may seek to enable that a target amount of water in liquid form is emitted for subsequent use. A technical benefit may include that an appropriate amount of water is generated for future use even if the fuel cell system is currently operating in a condition that would not enable such a generation of water.

Optionally in some examples, including in at least one preferred example, a ratio between the increased air feeding pressure and the current air feeding pressure is equal to or greater than 1.02, preferably equal to or greater than 1.05. Such a ratio may imply an appropriate operation of the fuel cell system.

Optionally in some examples, including in at least one preferred example, the processing circuitry is configured to:
- on the basis of the target water amount information; the power information; the current coolant temperature information; the current cooling capacity information and the current air feeding pressure information:
   ∘ in response to determining that the fuel cell system, when operated at the current coolant temperature and the current air feeding pressure cannot produce the actual or predicted power as well as emit the target amount of water in liquid form during the predetermined time range, and in response to determining that the current cooling capacity of the cooling system enables the coolant temperature to be lowered from the current temperature of the coolant whilst producing the actual or predicted power: issue control information to the fuel cell system to operate the fuel cell system at a lower coolant temperature than the current coolant temperature and at the current feeding pressure.

A technical benefit may include that an appropriately large amount of water can be produced by lowering the coolant temperature.

Optionally in some examples, including in at least one preferred example, an absolute value of a difference between the lower coolant temperature and the current coolant temperature is at least 5°C, optionally at least 10°C, alternatively at least 15°C. Such a difference may imply an appropriate operation of the fuel cell system.

Optionally in some examples, including in at least one preferred example, the processing circuitry is configured to:
- on the basis of the target water amount information; the power information; the current coolant temperature information; the current cooling capacity information and the current air feeding pressure information:
   ∘ in response to determining that the fuel cell system, when operated at the current coolant temperature and the current feeding pressure can produce the actual or predicted power as well as emit the target amount of water in liquid form during the predetermined time range, issue control information to the fuel cell system to operate the fuel cell system at the current coolant temperature and the current feeding pressure.

A technical benefit may include that an appropriately large amount of water can be produced without the need for modifying the operation of the fuel cell system.

Optionally in some examples, including in at least one preferred example, the processing circuitry is configured to predict the target water amount information on the basis of a predicted operating sequence of the fuel cell system.

A technical benefit may include that an appropriate amount of water is predicted.

Optionally in some examples, including in at least one preferred example, the processing circuitry is configured to predict the target water amount information on the basis of a predicted required cooling capacity of the cooling system on the basis of the predicted operating sequence of the fuel cell system.

A technical benefit may include that cooling of the fuel cell system during the predicted operating sequence may be enabled.

Optionally in some examples, including in at least one preferred example, the fuel cell system is located on a vehicle and is adapted to directly or indirectly supply a propulsion system of the vehicle with electric power, the predicted operating sequence of the fuel cell system comprising information of at least each one of the following: predicted speed of the vehicle; conditions ambient of the vehicle such as temperature and/or humidity; vehicle route information such as topography; traffic information, and vehicle location information.

A technical benefit may include that cooling of the fuel cell system during the predicted operating sequence may be enabled.

Optionally in some examples, including in at least one preferred example, the processing circuitry is configured to determine the current cooling capacity of the cooling system on the basis of at least one of the following parameters: an ambient temperature of the temperature ambient of the cooling system; a coolant flow speed, preferably a maximum coolant flow speed, of the coolant in the cooling system, and an air flow speed of a current or predicted speed of air flowing past at least a portion of the cooling system.

A technical benefit may include that the current cooling capacity of the cooling system is determined in an appropriate manner.

According to a second aspect of the disclosure, there is provided a fuel cell system comprising the computer system of the first aspect of the disclosure.

Optionally in some examples, including in at least one preferred example, the fuel cell system further comprises a cooling system accommodating the coolant, the cooling system comprising a radiator and the fuel cell system comprising a discharge nozzle adapted to discharge the water in liquid form upstream of or onto the radiator.

A technical benefit may include that the discharge the water in liquid form upstream of or onto the radiator may imply an appropriate cooling of coolant flowing in the radiator.

According to a third aspect of the disclosure, there is provided a vehicle comprising the computer system of the first aspect of the disclosure and/or a fuel cell system of the second aspect of the disclosure.

According to a fourth aspect of the disclosure, there is provided a computer-implemented method for issuing control information to a fuel cell system being fueled by hydrogen gas and air, wherein the air is supplied to the fuel cell system at an air feeding pressure, the fuel cell system being adapted to be cooled by a cooling system accommodating a coolant, the fuel cell system being adapted to produce power and to emit water, the method comprising:
- by processing circuitry of a computer system, obtaining target water amount information indicative of a target amount of water in liquid form which is requested to be emitted from the fuel cell system during a predetermined time range;
- by the processing circuitry, obtaining power information indicative of an actual or predicted power produced by the fuel cell system during the predetermined time range;
- by the processing circuitry, obtaining current coolant temperature information indicative of a current temperature of the coolant;
- by the processing circuitry, obtaining current cooling capacity information indicative of a current cooling capacity of the cooling system;
- by the processing circuitry, obtaining current air feeding pressure information indicative of a current air feeding pressure at which air is supplied to the fuel cell system;
- by the processing circuitry, on the basis of the target water amount information; the power information; the current coolant temperature information; the current cooling capacity information and the current air feeding pressure information:
   ∘ in response to determining that the fuel cell system, when operated at the current coolant temperature and the current air feeding pressure cannot produce the actual or predicted power as well as emit the target amount of water in liquid form during the predetermined time range, and in response to determining that the current cooling capacity of the cooling system does not enable the coolant temperature to be lowered from the current temperature of the coolant whilst producing the actual or predicted power: issuing control information to the fuel cell system to operate the fuel cell system at an increased air feeding pressure, the increased air feeding pressure being higher than the current air feeding pressure.

Technical benefits associated with features of the fourth aspect of the disclosure correspond to the technical benefits associated with similar features of the first aspect of the disclosure and are consequently not repeated here.

Optionally in some examples, including in at least one preferred example, a ratio between the increased air feeding pressure and the current air feeding pressure is equal to or greater than 1.02, preferably equal to or greater than 1.05.

Optionally in some examples, including in at least one preferred example, the method further comprises:
- by the processing circuitry, on the basis of the target water amount information; the power information; the current coolant temperature information; the current cooling capacity information and the current air feeding pressure information:
   ∘ in response to determining that the fuel cell system, when operated at the current coolant temperature and the current air feeding pressure cannot produce the actual or predicted power as well as emit the target amount of water in liquid form during the predetermined time range, and in response to determining that the current cooling capacity of the cooling system enables the coolant temperature to be lowered from the current temperature of the coolant whilst producing the actual or predicted power: issuing control information to the fuel cell system to operate the fuel cell system at a lower coolant temperature than the current coolant temperature and at the current feeding pressure.

Optionally in some examples, including in at least one preferred example, an absolute value of a difference between the lower coolant temperature and the current coolant temperature is at least 5°C, optionally at least 10°C, alternatively at least 15°C. Such a difference may imply an appropriate operation of the fuel cell system.

Optionally in some examples, including in at least one preferred example, the method further comprises:
- by the processing circuitry, on the basis of the target water amount information; the power information; the current coolant temperature information; the current cooling capacity information and the current air feeding pressure information:
   ∘ by the processing circuitry, in response to determining that the fuel cell system, when operated at the current coolant temperature and the current feeding pressure can produce the actual or predicted power as well as emit the target amount of water in liquid form during the predetermined time range, issuing control information to the fuel cell system to operate the fuel cell system at the current coolant temperature and the current feeding pressure.

Optionally in some examples, including in at least one preferred example, the method further comprises: by the processing circuitry, predicting the target water amount information on the basis of a predicted required cooling capacity of the cooling system on the basis of the predicted operating sequence of the fuel cell system.

Optionally in some examples, including in at least one preferred example, the fuel cell system is located on a vehicle and is adapted to directly or indirectly supply a propulsion system of the vehicle with electric power, the predicted operating sequence of the fuel cell system comprising information of at least each one of the following: predicted speed of the vehicle; conditions ambient of the vehicle such as temperature and/or humidity; vehicle route information such as topography; traffic information, and vehicle location information.

Optionally in some examples, including in at least one preferred example, the method further comprises, by the processing circuitry, determining the current cooling capacity of the cooling system on the basis of at least one of the following parameters: an ambient temperature of the temperature ambient of the cooling system; a coolant flow speed, preferably a maximum coolant flow speed, of the coolant in the cooling system, and an air flow speed of a current or predicted speed of air flowing past at least a portion of the cooling system.

Optionally in some examples, including in at least one preferred example, the method further comprises: by the processing circuitry, predicting the target water amount information on the basis of a predicted operating sequence of the fuel cell system.

According to a fifth aspect of the disclosure, there is provided a computer program product comprising program code for performing, when executed by the processing circuitry, the method of the fourth aspect of the disclosure.

According to a sixth aspect of the disclosure, there is provided a non-transitory computer-readable storage medium comprising instructions, which when executed by the processing circuitry, cause the processing circuitry to perform the method of the fourth aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic side view of an exemplary vehicle according to the present disclosure.
**FIG. 2** schematically illustrates an exemplary fuel cell system according to the present disclosure.
**FIG. 3** is flow chart of an exemplary method according to the present disclosure.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

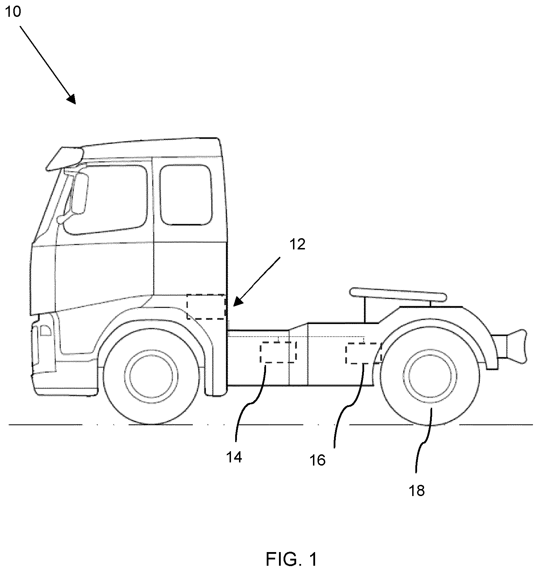

**FIG. 1** is a schematic side view of an exemplary vehicle 10. The **FIG. 1** vehicle 10 comprises a fuel cell system 12 adapted to produce electric power. Purely by way of example, the fuel cell system 12 may be adapted to supply electric power to a battery 14 and/or to a consumer 16 of electric power. Purely by way of example, the consumer 16 may comprise or be constituted by an electric motor adapted to propel the vehicle 10 via one or more wheels 18 of the vehicle. Put differently, the fuel cell system 12 may be adapted to directly or indirectly supply a propulsion system 16 of the vehicle 10 with electric power. Such a propulsion system 16 may comprise or be constituted by the above-mentioned electric motor 16. It should be noted that a vehicle, such as the **FIG. 1** vehicle 10, is merely an example of a possible field of use for the fuel cell system.

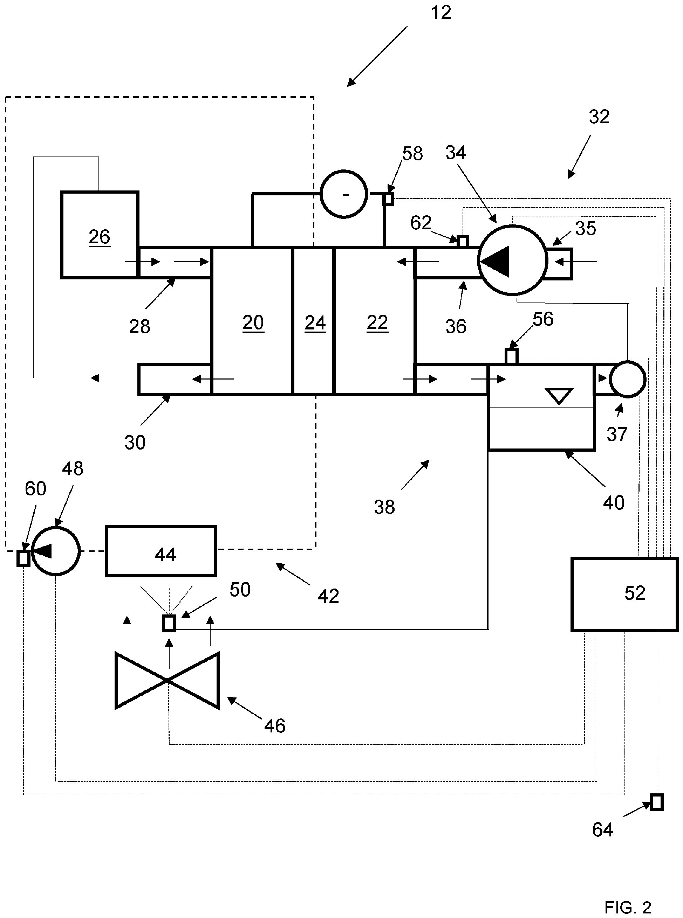

**FIG. 2** schematically illustrates an exemplary fuel cell system 12 according to the present disclosure. Purely by way of example, the fuel cell system 12 exemplified in **FIG. 2** may be used in a vehicle, such as the **FIG. 1** vehicle 10. The fuel cell system 12 is adapted to be fueled by hydrogen gas and air. As may be realized from **FIG. 2**, the fuel cell system 12 may comprise an anode 20 and a cathode 22 with an electrolyte 24 or a membrane located therebetween.

Furthermore, as indicated in **FIG. 2**, the fuel cell system 12 may comprise a source of hydrogen 26. As a non-limiting example, the source of hydrogen 26 may comprise or be constituted by a tank. The source of hydrogen 26 may be selectively connected to the anode 20, for instance via a hydrogen inlet system 28 as indicated in **FIG. 2**. Moreover, hydrogen not consumed by the anode 20 may be discharged from the anode 20 via a hydrogen outlet system 30. Purely by way of example, and as indicated in **FIG. 2**, hydrogen discharged from the anode 20 via the hydrogen outlet system 30 may be recirculated to the source of hydrogen 26, possibly via a filtering assembly (not shown).

Moreover, again with reference to **FIG. 2**, the fuel cell system 12 may comprise a source of air 32. As a non-limiting example, the source of air 32 may comprise, or be constituted by, a pump 34 an inlet side 35 of which is in fluid communication with the air ambient of the fuel cell system 12. The source of air 32 may be selectively connected to the cathode 22, for instance via an air inlet system 36 as indicated in **FIG. 2**. Moreover, exhaust that comprises water discharged from the cathode 22 via an exhaust system 38. Purely by way of example, the exhaust system 38 may comprise a water container 40 adapted to contain water in liquid form which water has been extracted, e.g. by means of separation and/or condensation, from the water, which may be in the form of steam, discharged from the cathode 22.

Purely by way of example, and as indicated in **FIG. 2**, the source of air 32 may instead of a pump comprise, or be constituted by, a compressor 34 that is mechanically connected to a turbine 37 adapted to receive exhaust from e.g. the exhaust system 38.

As indicated in **FIG. 2**, the fuel cell system 12 comprises a cooling system 42. The cooling system 42 accommodates a coolant and is adapted to cool a portion of the fuel cell system such as at least one of the anode 20, the cathode 22, and the electrolyte 24. As exemplified in **FIG. 2**, the cooling system 42 may comprise a radiator 44 through which the coolant may flow to be cooled. The radiator 44 may act as a heat exchanger and may for instance be cooled by air. Purely by way of example, and as indicated in **FIG. 2**, the cooling system 42 may also comprise a fan 46 imparting a flow of air onto the radiator 44. Moreover, the cooling system 42 may comprise a cooling system pump 48 adapted to circulate the coolant in the cooling system 42.

**FIG. 2** also illustrates a computer system 52 comprising processing circuitry configured to issue control information to the fuel cell system 12. Purely by way of example, the computer system 52 may form part of an electronic control system. As may be realized from **FIG. 2**, the computer system 52 may be adapted to receive information from a plurality of portions of the fuel cell system 12. For instance, the computer system 52 may be adapted to receive water level information from a water level sensor 56 adapted to detect a water level in the water container 40. As another non-limiting example, the computer system 52 may be adapted to receive current power information from a power level sensor 58 adapted to detect the level of the electric power currently produced by the fuel cell system 12. Moreover, the computer system 52 may be adapted to receive coolant temperature information from a coolant temperature sensor 60 adapted to detect a temperature of the coolant. Additionally, the computer system 52 may be adapted to receive air feeding pressure information from an air feeding pressure sensor 62 adapted to detect a pressure downstream the pump 34. Further, the computer system 52 may be adapted to receive ambient temperature information from an ambient temperature sensor 64 adapted to detect a temperature ambient of the cooling system 42.

Furthermore, as schematically presented in **FIG. 2**, the fuel cell system 12 may comprise a discharge nozzle 50 adapted to discharge water in liquid form upstream of or onto the radiator 44. To this end, and as indicated in **FIG. 2**, the discharge nozzle 50 may be fluidly connected to the water container 40. The purpose of the discharge nozzle 50 is to increase the cooling capacity of the radiator in order to reduce the temperature of the coolant. Such a reduction of the temperature of the coolant may be needed in order to sufficiently cool the fuel cell system 12, for instance when the fuel cell system 12 is operated so as to produce electric power at a high power level.

As such, the discharge nozzle 50 is predicted to be used, for instance when the fuel cell system 12 is predicted to be operated so as to produce electric power at a high power level. Consequently, it may be desired to ensure that the amount of water in liquid form in the water container 40 is sufficiently large such that an appropriately high amount of water can be discharged from the discharge nozzle 50 in order to ensure that the fuel cell system 12 is appropriately cooled. Purely by way of example, the computer system 52, e.g. the processing circuitry thereof, may be adapted to: determine a volume of water needed for an operating condition predicted to occur after a predetermined time range, determine the volume of water currently present in the water container 40 and use the difference therebetween for determining a target amount of water in liquid form which is requested to be emitted from the fuel cell system 12 during a predetermined time range. As may be realized from the above, it would be desired to obtain the target amount of water in liquid form with an appropriate level of certainty.

To this end, according to a first aspect of the disclosure, there is provided computer system 52 comprising processing circuitry configured to issue control information to a fuel cell system 12 (see **FIG. 2**) being fueled by hydrogen gas and air. The air is supplied to the fuel cell system at an air feeding pressure, e.g. using the above-mentioned pump 34. The fuel cell system is adapted to be cooled by a cooling system 42 accommodating a coolant. The fuel cell system 12 is adapted to produce power and to emit water.

The processing circuitry is configured to obtain target water amount information indicative of a target amount of water in liquid form which is requested to be emitted from the fuel cell system during a predetermined time range. Moreover, the processing circuitry is adapted to obtain power information indicative of an actual or predicted power produced by the fuel cell system during the predetermined time range. Purely by way of example, the actual or predicted power produced by the fuel cell system may be determined using the above-mentioned current power information from the power level sensor 58. Instead of, or in addition to, using the current power information, power information may be obtained from a prediction of the operating condition of the fuel cell system 12 during the predetermined time range.

Moreover, the processing circuitry is configured to obtain current coolant temperature information indicative of a current temperature of the coolant. Purely by way of example, the current coolant temperature information may be obtained using a coolant temperature sensor 60 as exemplified in **FIG. 2**. Further, the processing circuitry is configured to obtain current cooling capacity information indicative of a current cooling capacity of the cooling system 42. By way of example only, the processing circuitry may be configured to determine the current cooling capacity of the cooling system 42 on the basis of at least one of the following parameters: an ambient temperature of the temperature ambient of the cooling system, which for instance may be obtained using information from an ambient temperature sensor 64, as exemplified in **FIG. 2**; a coolant flow speed, preferably a maximum coolant flow speed, of the coolant in the cooling system which may be obtained using information from a cooling system pump 48, see **FIG. 2**, and an air flow speed of a current or predicted speed of air flowing past at least a portion of the cooling system, which may be obtained using information from a fan 46, see **FIG. 2**, and/or information indicative of a current speed of a vehicle 10 (see **FIG. 1**) in examples in which the fuel cell system 12 is hosted by a vehicle 10. In addition to the above, the processing circuitry is configured to obtain current air feeding pressure information indicative of a current air feeding pressure at which air is supplied to the fuel cell system, for instance using the air feeding pressure information from an air feeding pressure sensor 62, see **FIG. 2**.

The processing circuitry is configured to: on the basis of the target water amount information; the power information; the current coolant temperature information; the current cooling capacity information and the current air feeding pressure information:
∘ in response to determining that the fuel cell system 12, when operated at the current coolant temperature and the current air feeding pressure cannot produce the actual or predicted power as well as emit the target amount of water in liquid form during the predetermined time range, and in response to determining that the current cooling capacity of the cooling system does not enable the coolant temperature to be lowered from the current temperature of the coolant whilst producing the actual or predicted power: issue control information to the fuel cell system 12 to operate the fuel cell system at an increased air feeding pressure, the increased air feeding pressure being higher than the current air feeding pressure.

Purely by way of example, the control information to the fuel cell system 12 to operate the fuel cell system at an increased air feeding pressure may comprise control information to the pump 34 to increase its rotational speed. In the event that the pump 34 has a variable displacement, the control information to the fuel cell system 12 to operate the fuel cell system at an increased air feeding pressure may instead or in addition comprise control information to the pump 34 to increase its displacement. Instead of, or in addition to controlling the pump 34, the control information to the fuel cell system 12 to operate the fuel cell system at an increased air feeding pressure may comprise control information to a valve (not shown) of the air inlet system 36.

As another non-limiting example, in examples of the fuel cell system 12 in which the source of air 32 instead of a pump comprises, or is constituted by, a compressor 34 that is mechanically connected to a turbine 37 adapted to receive exhaust from e.g. the exhaust system 38, the control information to the fuel cell system 12 to operate the fuel cell system at an increased air feeding pressure may comprise control information to the turbine 37 to increase its rotational speed. By way of example only, if the turbine 37 is associated with a variable turbine, the control information may be information indicative of a target geometry of the turbine 37.

By way of example only, a ratio between the increased air feeding pressure and the current air feeding pressure may be equal to or greater than 1.02, preferably equal to or greater than 1.05.

As such, when the fuel cell system 12 is operated, a target amount of water in liquid form which is requested to be emitted from the fuel cell system 12 during a predetermined time range and it is determined that the target amount of water cannot be emitted by lowering the temperature of the coolant whilst producing the actual or predicted power, the fuel cell system 12 is operated at an increased air feeding pressure in order to enable that the target amount of water in liquid form is emitted and that the actual or predicted power is produced.

Purely by way of example, the processing circuitry may also be configured to: on the basis of the target water amount information; the power information; the current coolant temperature information; the current cooling capacity information and the current air feeding pressure information:
∘ in response to determining that the fuel cell system 12, when operated at the current coolant temperature and the current air feeding pressure cannot produce the actual or predicted power as well as emit the target amount of water in liquid form during the predetermined time range, and in response to determining that the current cooling capacity of the cooling system enables the coolant temperature to be lowered from the current temperature of the coolant whilst producing the actual or predicted power: issue control information to the fuel cell system to operate the fuel cell system at a lower coolant temperature than the current coolant temperature and at the current feeding pressure.

As such, when the fuel cell system 12 is operated, a target amount of water in liquid form which is requested to be emitted from the fuel cell system 12 during a predetermined time range and it is determined that the target amount of water can be emitted by lowering the temperature of the coolant whilst producing the actual or predicted power, the fuel cell system 12 is operated at a lowered temperature of the coolant in order to enable that the target amount of water in liquid form is emitted and that the actual or predicted power is produced.

By way of example only, an absolute value of a difference between the lower coolant temperature and the current coolant temperature is at least 5°C, optionally at least 10°C, alternatively at least 15°C. Here, it should be noted that the lower coolant temperature is lower than the current coolant temperature. As such, the lower coolant temperature subtracted by the current coolant temperature results in a negative value, i.e. a negative difference, but the absolute value of the difference between the lower coolant temperature and the current coolant temperature is positive.

As another non-limiting example, the processing circuitry may also be configured to: on the basis of the target water amount information; the power information; the current coolant temperature information; the current cooling capacity information and the current air feeding pressure information:
∘ in response to determining that the fuel cell system, when operated at the current coolant temperature and the current feeding pressure can produce the actual or predicted power as well as emit the target amount of water in liquid form during the predetermined time range, issue control information to the fuel cell system to operate the fuel cell system at the current coolant temperature and the current feeding pressure.

As such, when the fuel cell system 12 is operated, a target amount of water in liquid form which is requested to be emitted from the fuel cell system 12 during a predetermined time range and it is determined that the target amount of water can be emitted without lowering the temperature of the coolant whilst producing the actual or predicted power, the fuel cell system 12 is operated at the current of the coolant and the current feeding pressure. Put differently, the fuel cell system 12 may be operated in its current operating condition.

As has been intimated above, when the discharge nozzle 50 may be predicted to be used, for instance when the fuel cell system 12 is predicted to be operated so as to produce electric power at a high power level and/or when the fuel cell system 12 is predicted to be operated in hot ambient conditions, it is desired to ensure that the amount of water in liquid form in the water container 40 is sufficiently large such that an appropriately high amount of water can be discharged from the discharge nozzle 50 in order to ensure that the fuel cell system 12 is appropriately cooled. As such, it may be desired to determine the target water amount information.

To this end, though purely by way of example, the processing circuitry may be configured to predict the target water amount information on the basis of a predicted operating sequence of the fuel cell system 12. By way of example only, the processing circuitry may be configured to predict the target water amount information on the basis of a predicted required cooling capacity of the cooling system on the basis of the predicted operating sequence of the fuel cell system. Purely by way of example, when the fuel cell system 12 is located on a vehicle 10 and is adapted to directly or indirectly supply a propulsion system of the vehicle with electric power, as intimated above, the predicted operating sequence of the fuel cell system may comprises information of at least each one of the following: predicted speed of the vehicle; conditions ambient of the vehicle such as temperature and/or humidity; vehicle route information such as topography, and vehicle location information. By way of example only, the processing circuitry may be configured to receive the above information from other systems, such as a route planning system (not shown) and a positioning system (not shown).

For the sake of completeness, it should be noted that if the fuel cell system 12 is not located on a vehicle 10, the operating sequence of the fuel cell system 12 may be predicted using other strategies. For example, if the fuel cell system 12 is adapted to directly or indirectly supply an electric machine, e.g. an industrial machine, with electric power, the operating sequence of such an electric machine may be predicted by using e.g. an intended operation plan for the electric machine, for instance indicating when the electric machine is predicted to assume an operating condition requiring a relatively high supply of electric power.

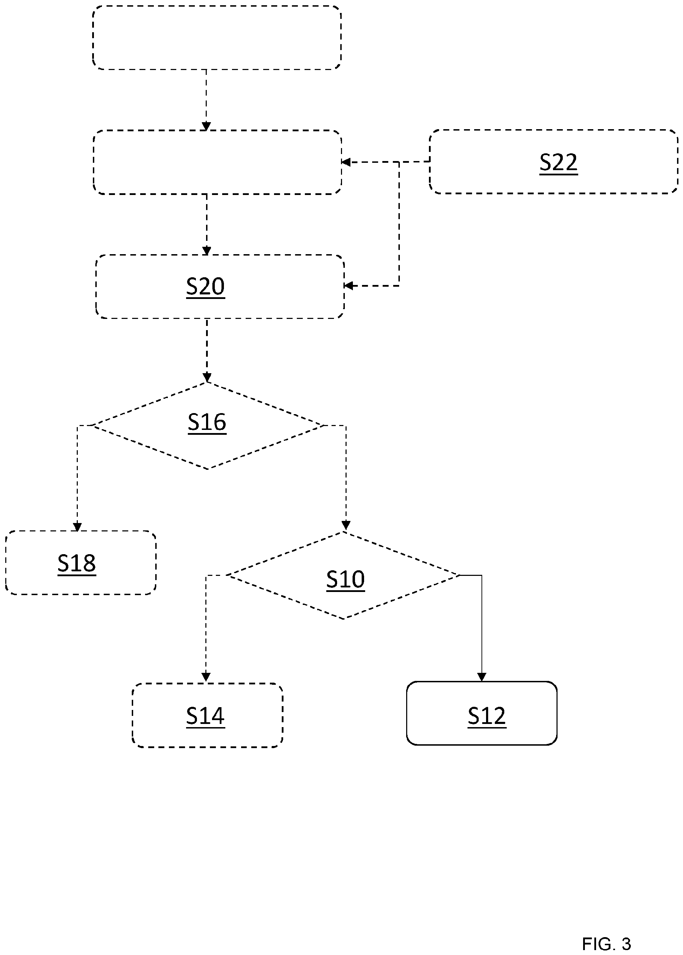

It should be noted that that the present disclosure has been presented in relation to the first aspect thereof relating to a computer system comprising processing circuitry. However, the above presentation is equally applicable to a fourth aspect of the disclosure relating to the method. However, for the sake of completeness, **FIG. 3** illustrates a flow chart of a method of the present disclosure.

Thus, the fourth aspect of the disclosure relates to a computer-implemented method for issuing control information to a fuel cell system 12 being fueled by hydrogen gas and air, wherein the air is supplied to the fuel cell system 12 at an air feeding pressure, the fuel cell system 12 being adapted to be cooled by a cooling system 42 accommodating a coolant. The fuel cell system 12 is adapted to produce power and to emit water, the method comprises:
- by processing circuitry of a computer system 52, obtaining target water amount information indicative of a target amount of water in liquid form which is requested to be emitted from the fuel cell system during a predetermined time range;
- by the processing circuitry, obtaining power information indicative of an actual or predicted power produced by the fuel cell system during the predetermined time range;
- by the processing circuitry, obtaining current coolant temperature information indicative of a current temperature of the coolant;
- by the processing circuitry, obtaining current cooling capacity information indicative of a current cooling capacity of the cooling system;
- by the processing circuitry, obtaining current air feeding pressure information indicative of a current air feeding pressure at which air is supplied to the fuel cell system;
- by the processing circuitry, on the basis of the target water amount information; the power information; the current coolant temperature information; the current cooling capacity information and the current air feeding pressure information:
   ∘ **S10** in response to determining that the fuel cell system, when operated at the current coolant temperature and the current air feeding pressure cannot produce the actual or predicted power as well as emit the target amount of water in liquid form during the predetermined time range, and in response to determining that the current cooling capacity of the cooling system does not enable the coolant temperature to be lowered from the current temperature of the coolant whilst producing the actual or predicted power: **S12** issuing control information to the fuel cell system to operate the fuel cell system at an increased air feeding pressure, the increased air feeding pressure being higher than the current air feeding pressure.

Optionally in some examples, including in at least one preferred example, the method further comprises:
- by the processing circuitry, on the basis of the target water amount information; the power information; the current coolant temperature information; the current cooling capacity information and the current air feeding pressure information:
   ∘ **S10** in response to determining that the fuel cell system, when operated at the current coolant temperature and the current air feeding pressure cannot produce the actual or predicted power as well as emit the target amount of water in liquid form during the predetermined time range, and in response to determining that the current cooling capacity of the cooling system enables the coolant temperature to be lowered from the current temperature of the coolant whilst producing the actual or predicted power: **S14** issuing control information to the fuel cell system to operate the fuel cell system at a lower coolant temperature than the current coolant temperature and at the current feeding pressure.

Optionally in some examples, including in at least one preferred example, the method further comprises:
- by the processing circuitry, on the basis of the target water amount information; the power information; the current coolant temperature information; the current cooling capacity information and the current air feeding pressure information:
   ∘ **S16** in response to determining that the fuel cell system, when operated at the current coolant temperature and the current feeding pressure can produce the actual or predicted power as well as emit the target amount of water in liquid form during the predetermined time range, **S18** issuing control information to the fuel cell system to operate the fuel cell system at the current coolant temperature and the current feeding pressure.

Optionally in some examples, including in at least one preferred example, the method further comprises: by the processing circuitry, **S20** predicting the target water amount information on the basis of a predicted required cooling capacity of the cooling system on the basis of the predicted operating sequence of the fuel cell system.

Optionally in some examples, including in at least one preferred example, the fuel cell system is located on a vehicle and is adapted to directly or indirectly supply a propulsion system of the vehicle with electric power, S22 the predicted operating sequence of the fuel cell system comprising information of at least each one of the following: predicted speed of the vehicle; conditions ambient of the vehicle such as temperature and/or humidity; vehicle route information such as topography; traffic information, and vehicle location information.

Optionally in some examples, including in at least one preferred example, the method further comprises, by the processing circuitry, determining the current cooling capacity of the cooling system 42 on the basis of at least one of the following parameters: an ambient temperature of the temperature ambient of the cooling system; a coolant flow speed, preferably a maximum coolant flow speed, of the coolant in the cooling system, and an air flow speed of a current or predicted speed of air flowing past at least a portion of the cooling system.

Optionally in some examples, including in at least one preferred example, the method further comprises: by the processing circuitry, predicting the target water amount information on the basis of a predicted operating sequence of the fuel cell system.

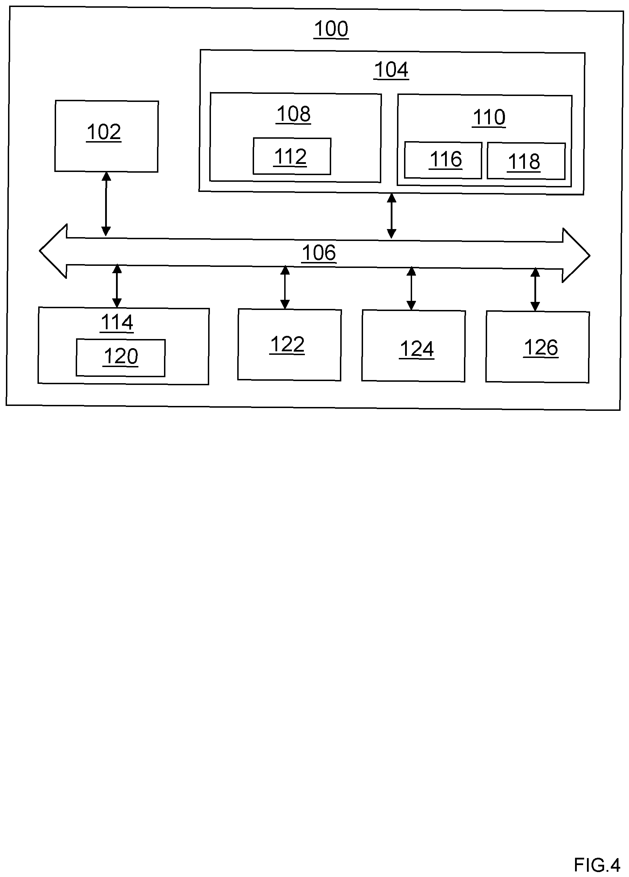

**FIG. 4** is a schematic diagram of a computer system **100** for implementing examples disclosed herein. The computer system **100** is adapted to execute instructions from a computer-readable medium to perform these and/or any of the functions or processing described herein. The computer system **100** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **100** may comprise at least one computing device or electronic device capable of including firmware, hardware, and/or executing software instructions to implement the functionality described herein. The computer system **100** may include processing circuitry **102** (e.g., processing circuitry including one or more processor devices or control units), a memory **104**, and a system bus **106**. The computer system **100** may include at least one computing device having the processing circuitry **102**. The system bus **106** provides an interface for system components including, but not limited to, the memory **104** and the processing circuitry **102**. The processing circuitry **102** may include any number of hardware components for conducting data or signal processing or for executing computer code stored in memory **104**. The processing circuitry **102** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **102** may further include computer executable code that controls operation of the programmable device.

The system bus **106** may be any of several types of bus structures that may further interconnect to a memory bus (with or without a memory controller), a peripheral bus, and/or a local bus using any of a variety of bus architectures. The memory **104** may be one or more devices for storing data and/or computer code for completing or facilitating methods described herein. The memory **104** may include database components, object code components, script components, or other types of information structure for supporting the various activities herein. Any distributed or local memory device may be utilized with the systems and methods of this description. The memory **104** may be communicably connected to the processing circuitry **102** (e.g., via a circuit or any other wired, wireless, or network connection) and may include computer code for executing one or more processes described herein. The memory **104** may include non-volatile memory **108** (e.g., read-only memory (ROM), erasable programmable read-only memory (EPROM), electrically erasable programmable read-only memory (EEPROM), etc.), and volatile memory **110** (e.g., random-access memory (RAM)), or any other medium which can be used to carry or store desired program code in the form of machine-executable instructions or data structures and which can be accessed by a computer or other machine with processing circuitry **102**. A basic input/output system (BIOS) **112** may be stored in the non-volatile memory **108** and can include the basic routines that help to transfer information between elements within the computer system **100**.

The computer system **100** may further include or be coupled to a non-transitory computer-readable storage medium such as the storage device **114**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **114** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **114** and/or in the volatile memory **110**, which may include an operating system **116** and/or one or more program modules **118**. All or a portion of the examples disclosed herein may be implemented as a computer program **120** stored on a transitory or non-transitory computer-usable or computer-readable storage medium (e.g., single medium or multiple media), such as the storage device **114**, which includes complex programming instructions (e.g., complex computer-readable program code) to cause the processing circuitry **102** to carry out actions described herein. Thus, the computer-readable program code of the computer program **120** can comprise software instructions for implementing the functionality of the examples described herein when executed by the processing circuitry **102**. In some examples, the storage device **114** may be a computer program product (e.g., readable storage medium) storing the computer program **120** thereon, where at least a portion of a computer program **120** may be loadable (e.g., into a processor) for implementing the functionality of the examples described herein when executed by the processing circuitry **102**. The processing circuitry **102** may serve as a controller or control system for the computer system **100** that is to implement the functionality described herein.

The computer system **100** may include an input device interface **122** configured to receive input and selections to be communicated to the computer system **100** when executing instructions, such as from a keyboard, mouse, touch-sensitive surface, etc. Such input devices may be connected to the processing circuitry **102** through the input device
interface **122** coupled to the system bus **106** but can be connected through other interfaces, such as a parallel port, an Institute of Electrical and Electronic Engineers (IEEE) 1394 serial port, a Universal Serial Bus (USB) port, an IR interface, and the like. The computer system **100** may include an output device interface **124** configured to forward output, such as to a display, a video display unit (e.g., a liquid crystal display (LCD) or a cathode ray tube (CRT)). The computer system **100** may include a communications interface **126** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system (52) comprising processing circuitry configured to issue control information to a fuel cell system (12) being fueled by hydrogen gas and air, wherein the air is supplied to the fuel cell system (12) at an air feeding pressure, the fuel cell system (12) being adapted to be cooled by a cooling system (42) accommodating a coolant, the fuel cell system (12) being adapted to produce power and to emit water, the processing circuitry being configured to:
- obtain target water amount information indicative of a target amount of water in liquid form which is requested to be emitted from the fuel cell system (12) during a predetermined time range;
- obtain power information indicative of an actual or predicted power produced by the fuel cell system (12) during the predetermined time range;
- obtain current coolant temperature information indicative of a current temperature of the coolant;
- obtain current cooling capacity information indicative of a current cooling capacity of the cooling system (42);
- obtain current air feeding pressure information indicative of a current air feeding pressure at which air is supplied to the fuel cell system (12);
- on the basis of the target water amount information; the power information; the current coolant temperature information; the current cooling capacity information and the current air feeding pressure information:
   ∘ in response to determining that the fuel cell system (12), when operated at the current coolant temperature and the current air feeding pressure cannot produce the actual or predicted power as well as emit the target amount of water in liquid form during the predetermined time range, and in response to determining that the current cooling capacity of the cooling system (42) does not enable the coolant temperature to be lowered from the current temperature of the coolant whilst producing the actual or predicted power: issue control information to the fuel cell system (12) to operate the fuel cell system (12) at an increased air feeding pressure, the increased air feeding pressure being higher than the current air feeding pressure.

Example 2. The computer system (52) of Example 1, wherein a ratio between the increased air feeding pressure and the current air feeding pressure is equal to or greater than 1.02, preferably equal to or greater than 1.05.

Example 3. The computer system (52) of Example 1 or Example 2, wherein the processing circuitry is configured to:
- on the basis of the target water amount information; the power information; the current coolant temperature information; the current cooling capacity information and the current air feeding pressure information:
   ∘ in response to determining that the fuel cell system (12), when operated at the current coolant temperature and the current air feeding pressure cannot produce the actual or predicted power as well as emit the target amount of water in liquid form during the predetermined time range, and in response to determining that the current cooling capacity of the cooling system (42) enables the coolant temperature to be lowered from the current temperature of the coolant whilst producing the actual or predicted power: issue control information to the fuel cell system (12) to operate the fuel cell system (12) at a lower coolant temperature than the current coolant temperature and at the current feeding pressure.

Example 4. The computer system (52) of any of Examples 1-3, wherein an absolute value of a difference between the lower coolant temperature and the current coolant temperature is at least 5°C, optionally at least 10°C, alternatively at least 15°C.

Example 5. The computer system (52) of any one of the preceding Examples, wherein the processing circuitry is configured to:
- on the basis of the target water amount information; the power information; the current coolant temperature information; the current cooling capacity information and the current air feeding pressure information:
   ∘ in response to determining that the fuel cell system (12), when operated at the current coolant temperature and the current feeding pressure can produce the actual or predicted power as well as emit the target amount of water in liquid form during the predetermined time range, issue control information to the fuel cell system (12) to operate the fuel cell system (12) at the current coolant temperature and the current feeding pressure.

Example 6. The computer system (52) of any of Examples 1-5, wherein the processing circuitry is configured to predict the target water amount information on the basis of a predicted operating sequence of the fuel cell system (12).

Example 7. The computer system (52) of Example 6, wherein the processing circuitry is configured to predict the target water amount information on the basis of a predicted required cooling capacity of the cooling system (42) on the basis of the predicted operating sequence of the fuel cell system (12).

Example 8. The computer system (52) of Example 6 or Example 7, wherein the fuel cell system (12) is located on a vehicle (10) and is adapted to directly or indirectly supply a propulsion system (16) of the vehicle (10) with electric power, the predicted operating sequence of the fuel cell system (12) comprising information of at least each one of the following: predicted speed of the vehicle (10); conditions ambient of the vehicle (10) such as temperature and/or humidity; vehicle (10) route information such as topography; traffic information, and vehicle (10) location information.

Example 9. The computer system (52) of any one of the preceding Examples, wherein the processing circuitry is configured to determine the current cooling capacity of the cooling system (42) on the basis of at least one of the following parameters: an ambient temperature of the temperature ambient of the cooling system (42); a coolant flow speed, preferably a maximum coolant flow speed, of the coolant in the cooling system (42), and an air flow speed of a current or predicted speed of air flowing past at least a portion of the cooling system (42).

Example 10. A fuel cell system (12) comprising the computer system (52) of any of Examples 1-9.

Example 11. The fuel cell system (12) of Example 10, further comprising a cooling system (42) accommodating the coolant, the cooling system (42) comprising a radiator (44) and the fuel cell system (12) comprising a discharge nozzle (50) adapted to discharge the water in liquid form upstream of or onto the radiator (44).

Example 12. A vehicle (10) comprising the computer system (52) of any of Examples 1-9 and/or a fuel cell system (12) of any one of Examples 10 - 11.

Example 13. A computer-implemented method for issuing control information to a fuel cell system (12) being fueled by hydrogen gas and air, wherein the air is supplied to the fuel cell system (12) at an air feeding pressure, the fuel cell system (12) being adapted to be cooled by a cooling system (42) accommodating a coolant, the fuel cell system (12) being adapted to produce power and to emit water, the method comprising:
- by processing circuitry of a computer system (52), obtaining target water amount information indicative of a target amount of water in liquid form which is requested to be emitted from the fuel cell system (12) during a predetermined time range;
- by the processing circuitry, obtaining power information indicative of an actual or predicted power produced by the fuel cell system (12) during the predetermined time range;
- by the processing circuitry, obtaining current coolant temperature information indicative of a current temperature of the coolant;
- by the processing circuitry, obtaining current cooling capacity information indicative of a current cooling capacity of the cooling system (42);
- by the processing circuitry, obtaining current air feeding pressure information indicative of a current air feeding pressure at which air is supplied to the fuel cell system (12);
- by the processing circuitry, on the basis of the target water amount information; the power information; the current coolant temperature information; the current cooling capacity information and the current air feeding pressure information:
   ∘ in response to determining that the fuel cell system (12), when operated at the current coolant temperature and the current air feeding pressure cannot produce the actual or predicted power as well as emit the target amount of water in liquid form during the predetermined time range, and in response to determining that the current cooling capacity of the cooling system (42) does not enable the coolant temperature to be lowered from the current temperature of the coolant whilst producing the actual or predicted power: issuing control information to the fuel cell system (12) to operate the fuel cell system (12) at an increased air feeding pressure, the increased air feeding pressure being higher than the current air feeding pressure.

Example 14. The method of Example 13, wherein a ratio between the increased air feeding pressure and the current air feeding pressure is equal to or greater than 1.02, preferably equal to or greater than 1.05.

Example 15. The method of Example 13 or Example 14, further comprising:
- by the processing circuitry, on the basis of the target water amount information; the power information; the current coolant temperature information; the current cooling capacity information and the current air feeding pressure information:
   ∘ in response to determining that the fuel cell system (12), when operated at the current coolant temperature and the current air feeding pressure cannot produce the actual or predicted power as well as emit the target amount of water in liquid form during the predetermined time range, and in response to determining that the current cooling capacity of the cooling system (42) enables the coolant temperature to be lowered from the current temperature of the coolant whilst producing the actual or predicted power: issuing control information to the fuel cell system (12) to operate the fuel cell system (12) at a lower coolant temperature than the current coolant temperature and at the current feeding pressure.

Example 16. The computer system (52) of Example 15, wherein an absolute value of a difference between the lower coolant temperature and the current coolant temperature is at least 5°C, optionally at least 10°C, alternatively at least 15°C.

Example 17. The method of any one of Examples 13 to 16, further comprising:
- by the processing circuitry, on the basis of the target water amount information; the power information; the current coolant temperature information; the current cooling capacity information and the current air feeding pressure information:
   ∘ by the processing circuitry, in response to determining that the fuel cell system (12), when operated at the current coolant temperature and the current feeding pressure can produce the actual or predicted power as well as emit the target amount of water in liquid form during the predetermined time range, issuing control information to the fuel cell system (12) to operate the fuel cell system (12) at the current coolant temperature and the current feeding pressure.

Example 18. The method of any one of Examples 13 to 17, further comprising: by the processing circuitry, predicting the target water amount information on the basis of a predicted operating sequence of the fuel cell system (12).

Example 19. The method of Example 18, further comprising: by the processing circuitry, predicting the target water amount information on the basis of a predicted required cooling capacity of the cooling system (42) on the basis of the predicted operating sequence of the fuel cell system (12).

Example 20. The method of Example 18 or Example 19, wherein the fuel cell system (12) is located on a vehicle (10) and is adapted to directly or indirectly supply a propulsion system (16) of the vehicle (10) with electric power, the predicted operating sequence of the fuel cell system (12) comprising information of at least each one of the following: predicted speed of the vehicle (10); conditions ambient of the vehicle (10) such as temperature and/or humidity; vehicle (10) route information such as topography; traffic information, and vehicle (10) location information.

Example 21. The method of any one of Examples 13 to 20, wherein the method further comprises, by the processing circuitry, determining the current cooling capacity of the cooling system (42) on the basis of at least one of the following parameters: an ambient temperature of the temperature ambient of the cooling system (42); a coolant flow speed, preferably a maximum coolant flow speed, of the coolant in the cooling system (42), and an air flow speed of a current or predicted speed of air flowing past at least a portion of the cooling system (42).

Example 22. A computer program product comprising program code for performing, when executed by the processing circuitry, the method of any of Examples 13 - 21.

Example 23. A non-transitory computer-readable storage medium comprising instructions, which when executed by the processing circuitry, cause the processing circuitry to perform the method of any of Examples 13 - 21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (52) comprising processing circuitry configured to issue control information to a fuel cell system (12) being fueled by hydrogen gas and air, wherein the air is supplied to the fuel cell system (12) at an air feeding pressure, the fuel cell system (12) being adapted to be cooled by a cooling system (42) accommodating a coolant, the fuel cell system (12) being adapted to produce power and to emit water, the processing circuitry being configured to:
- obtain target water amount information indicative of a target amount of water in liquid form which is requested to be emitted from the fuel cell system (12) during a predetermined time range;
- obtain power information indicative of an actual or predicted power produced by the fuel cell system (12) during the predetermined time range;
- obtain current coolant temperature information indicative of a current temperature of the coolant;
- obtain current cooling capacity information indicative of a current cooling capacity of the cooling system (42);
- obtain current air feeding pressure information indicative of a current air feeding pressure at which air is supplied to the fuel cell system (12);
- on the basis of the target water amount information; the power information; the current coolant temperature information; the current cooling capacity information and the current air feeding pressure information:
∘ in response to determining that the fuel cell system (12), when operated at the current coolant temperature and the current air feeding pressure cannot produce the actual or predicted power as well as emit the target amount of water in liquid form during the predetermined time range, and in response to determining that the current cooling capacity of the cooling system (42) does not enable the coolant temperature to be lowered from the current temperature of the coolant whilst producing the actual or predicted power: issue control information to the fuel cell system (12) to operate the fuel cell system (12) at an increased air feeding pressure, the increased air feeding pressure being higher than the current air feeding pressure.

2. The computer system (52) of claim 1, wherein the processing circuitry is configured to:
- on the basis of the target water amount information; the power information; the current coolant temperature information; the current cooling capacity information and the current air feeding pressure information:
∘ in response to determining that the fuel cell system (12), when operated at the current coolant temperature and the current air feeding pressure cannot produce the actual or predicted power as well as emit the target amount of water in liquid form during the predetermined time range, and in response to determining that the current cooling capacity of the cooling system (42) enables the coolant temperature to be lowered from the current temperature of the coolant whilst producing the actual or predicted power: issue control information to the fuel cell system (12) to operate the fuel cell system (12) at a lower coolant temperature than the current coolant temperature and at the current feeding pressure.

3. The computer system (52) of claim 1 or claim 2, wherein the processing circuitry is configured to:
- on the basis of the target water amount information; the power information; the current coolant temperature information; the current cooling capacity information and the current air feeding pressure information:
∘ in response to determining that the fuel cell system (12), when operated at the current coolant temperature and the current feeding pressure can produce the actual or predicted power as well as emit the target amount of water in liquid form during the predetermined time range, issue control information to the fuel cell system (12) to operate the fuel cell system (12) at the current coolant temperature and the current feeding pressure.

4. The computer system (52) of any of claims 1-3, wherein the processing circuitry is configured to predict the target water amount information on the basis of a predicted operating sequence of the fuel cell system (12), preferably the processing circuitry is configured to predict the target water amount information on the basis of a predicted required cooling capacity of the cooling system (42) on the basis of the predicted operating sequence of the fuel cell system (12).

5. The computer system (52) of claim 4, wherein the fuel cell system (12) is located on a vehicle (10) and is adapted to directly or indirectly supply a propulsion system (16) of the vehicle (10) with electric power, the predicted operating sequence of the fuel cell system (12) comprising information of at least each one of the following: predicted speed of the vehicle (10); conditions ambient of the vehicle (10) such as temperature and/or humidity; vehicle (10) route information such as topography; traffic information, and vehicle (10) location information.

6. The computer system (52) of any one of the preceding claims, wherein the processing circuitry is configured to determine the current cooling capacity of the cooling system (42) on the basis of at least one of the following parameters: an ambient temperature of the temperature ambient of the cooling system (42); a coolant flow speed, preferably a maximum coolant flow speed, of the coolant in the cooling system (42), and an air flow speed of a current or predicted speed of air flowing past at least a portion of the cooling system (42).

7. A fuel cell system (12) comprising the computer system (52) of any of claims 1-6, preferably comprising a cooling system (42) accommodating the coolant, the cooling system (42) comprising a radiator (44) and the fuel cell system (12) comprising a discharge nozzle (50) adapted to discharge the water in liquid form upstream of or onto the radiator (44).

8. A vehicle (10) comprising the computer system (52) of any of claims 1 - 6 and/or a fuel cell system (12) of claim 7.

9. A computer-implemented method for issuing control information to a fuel cell system (12) being fueled by hydrogen gas and air, wherein the air is supplied to the fuel cell system (12) at an air feeding pressure, the fuel cell system (12) being adapted to be cooled by a cooling system (42) accommodating a coolant, the fuel cell system (12) being adapted to produce power and to emit water, the method comprising:
- by processing circuitry of a computer system (52), obtaining target water amount information indicative of a target amount of water in liquid form which is requested to be emitted from the fuel cell system (12) during a predetermined time range;
- by the processing circuitry, obtaining power information indicative of an actual or predicted power produced by the fuel cell system (12) during the predetermined time range;
- by the processing circuitry, obtaining current coolant temperature information indicative of a current temperature of the coolant;
- by the processing circuitry, obtaining current cooling capacity information indicative of a current cooling capacity of the cooling system (42);
- by the processing circuitry, obtaining current air feeding pressure information indicative of a current air feeding pressure at which air is supplied to the fuel cell system (12);
- by the processing circuitry, on the basis of the target water amount information; the power information; the current coolant temperature information; the current cooling capacity information and the current air feeding pressure information:
∘ in response to determining that the fuel cell system (12), when operated at the current coolant temperature and the current air feeding pressure cannot produce the actual or predicted power as well as emit the target amount of water in liquid form during the predetermined time range, and in response to determining that the current cooling capacity of the cooling system (42) does not enable the coolant temperature to be lowered from the current temperature of the coolant whilst producing the actual or predicted power: issuing control information to the fuel cell system (12) to operate the fuel cell system (12) at an increased air feeding pressure, the increased air feeding pressure being higher than the current air feeding pressure.

10. The method of claim 9, further comprising:
- by the processing circuitry, on the basis of the target water amount information; the power information; the current coolant temperature information; the current cooling capacity information and the current air feeding pressure information:
∘ in response to determining that the fuel cell system (12), when operated at the current coolant temperature and the current air feeding pressure cannot produce the actual or predicted power as well as emit the target amount of water in liquid form during the predetermined time range, and in response to determining that the current cooling capacity of the cooling system (42) enables the coolant temperature to be lowered from the current temperature of the coolant whilst producing the actual or predicted power: issuing control information to the fuel cell system (12) to operate the fuel cell system (12) at a lower coolant temperature than the current coolant temperature and at the current feeding pressure.

11. The method of claim 9 or claim 10, further comprising:
- by the processing circuitry, on the basis of the target water amount information; the power information; the current coolant temperature information; the current cooling capacity information and the current air feeding pressure information:
ο by the processing circuitry, in response to determining that the fuel cell system (12), when operated at the current coolant temperature and the current feeding pressure can produce the actual or predicted power as well as emit the target amount of water in liquid form during the predetermined time range, issuing control information to the fuel cell system (12) to operate the fuel cell system (12) at the current coolant temperature and the current feeding pressure.

12. The method of any one of claims 11 to 13, further comprising: by the processing circuitry, predicting the target water amount information on the basis of a predicted operating sequence of the fuel cell system (12), preferably further comprising: by the processing circuitry, predicting the target water amount information on the basis of a predicted required cooling capacity of the cooling system (42) on the basis of the predicted operating sequence of the fuel cell system (12), preferably the fuel cell system (12) is located on a vehicle (10) and is adapted to directly or indirectly supply a propulsion system (16) of the vehicle (10) with electric power, the predicted operating sequence of the fuel cell system (12) comprising information of at least each one of the following: predicted speed of the vehicle (10); conditions ambient of the vehicle (10) such as temperature and/or humidity; vehicle (10) route information such as topography; traffic information, and vehicle (10) location information.

13. The method of any one of claims 9 to 12, wherein the method further comprises, by the processing circuitry, determining the current cooling capacity of the cooling system (42) on the basis of at least one of the following parameters: an ambient temperature of the temperature ambient of the cooling system (42); a coolant flow speed, preferably a maximum coolant flow speed, of the coolant in the cooling system (42), and an air flow speed of a current or predicted speed of air flowing past at least a portion of the cooling system (42).

14. A computer program product comprising program code for performing, when executed by the processing circuitry, the method of any of claims 9-13.

15. A non-transitory computer-readable storage medium comprising instructions, which when executed by the processing circuitry, cause the processing circuitry to perform the method of any of claims 9-13.
